(19)

Europäisches
Patentamt
European
Patent Office
Office européen
des brevets

(11) **EP 3 827 897 A1**

(12) **EUROPEAN PATENT APPLICATION**

(43) Date of publication:
**02.06.2021  Bulletin 2021/22**

(21) Application number: **19212712.4**

(22) Date of filing: **29.11.2019**

(51) Int Cl.:
**B01J 21/04** *(2006.01)*          **B01J 21/12** *(2006.01)*
**B01J 23/18** *(2006.01)*          **B01J 23/644** *(2006.01)*
**B01J 35/10** *(2006.01)*          **B01J 37/00** *(2006.01)*
**B01J 37/02** *(2006.01)*          **B01J 37/04** *(2006.01)*
**B01J 37/08** *(2006.01)*          **B01D 53/00** *(2006.01)*
**B01J 35/00** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **SASOL Germany GmbH**
**20537 Hamburg (DE)**

(72) Inventors:
• **HARMENING, Thomas**
  **48159 Münster (DE)**
• **SCHÖNEBORN, Marcos**
  **22303 Hamburg (DE)**
• **JÄGER, Ann-Kathrin**
  **25541 Brunsbüttel (DE)**

(74) Representative: **Müller Schupfner & Partner
Patent- und Rechtsanwaltspartnerschaft mbB
Schellerdamm 19
21079 Hamburg (DE)**

(54) **ALUMINA BISMUTH CATALYST SUPPORT AND METHOD FOR ITS PRODUCTION**

(57)     The invention provides for a method to prepare an alumina catalyst support comprising bismuth for emission control applications, to an alumina catalyst support prepared according to the method of the invention and to an alumina catalyst support comprising bismuth and having a specific crystallinity value that leads to improved technical effects.

EP 3 827 897 A1

**Description**

**Field of the Invention**

The invention relates to a method to prepare an alumina bismuth catalyst support for emission control applications, to an alumina bismuth catalyst support prepared according to the method of the invention and to an alumina bismuth catalyst support having specific characteristics.

**Background of the Invention**

The main raw emission pollutants in exhaust gases are CO, NOx, unburned hydrocarbons and soot particles. Catalyst systems, including various components and precious metals, for application in emission control are known in the art. Usually a so-called Diesel Oxidation Catalyst (DOC) containing precious metals supported on high-surface area refractory oxides such as alumina or silica-alumina converts CO into $CO_2$ and the unburned hydrocarbons into $CO_2$ and water. Due to continuously stricter legislation regarding tailpipe emissions and the introduction of more realistic driving cycles, including RDE (Real Driving Emissions) and WLTP (Worldwide Harmonized Light Vehicle Test Procedure), the low temperature activity of such catalyst systems has become an important field of development.

The incorporation of activating and/or stabilizing additives (for example metal oxides) to the catalyst or catalyst support materials respectively is a well-known approach. WO 2017/064498 A1 and US 7,611,680 B2 disclose the beneficial effect of low temperature conversion for CO and hydrocarbons by the addition of $Bi_2O_3$ to a catalyst. In US 7,611,680 it is described that the bismuth is added as a promoter by an *in situ* reduction process. In WO 2017/064498 A1 the bismuth is supported on a support.

The prior art therefore teaches the incorporation of the $Bi_2O_3$ as a separate crystalline phase. This leads to low specific surface area of the promoting additive and therefore to limited beneficial interaction with the active precious metal.

The object of the present invention is therefore to provide an improved alumina bismuth support applicable in emission control catalysis having improved characteristics and a novel method for preparation of same.

**Description of the Invention**

According to a first aspect of the invention there is provided a method to prepare an alumina bismuth catalyst support, the method comprising the steps of:

i) providing an aluminum containing composition;
ii) providing a bismuth aqueous solution, the bismuth aqueous solution comprising a bismuth salt and a base comprising nitrogen, preferably ammonia, and having a pH value of between 4 and 9;
iii) contacting the aluminum containing composition with the bismuth aqueous solution to form an aluminum bismuth intermediate; and
iv) calcining the aluminum bismuth intermediate to form an alumina bismuth catalyst support.

The aluminum containing composition comprises at least one aluminum compound, the aluminum compound preferably being an aluminum oxide. The aluminum containing composition may additionally comprise silica and/or dopants.

The aluminum containing composition preferably comprises aluminum oxides such as $Al_2O_3$, aluminum oxide hydroxides such as AlOOH, AlOOH * $xH_2O$, aluminum trihydroxides ($Al(OH)_3$), or mixtures thereof. The aluminum containing composition preferably comprises at least 50 wt.-% of aluminum oxides, aluminum oxide hydroxides, aluminum trihydroxides, or mixtures thereof.

Preferably, the aluminum containing composition comprises at least 50 wt.% aluminum hydrates of the general formula $Al(OH)_3$, AlOOH * x $H_2O$ or mixtures thereof. More preferably the aluminum containing composition contains boehmite (AlOOH) and even more preferably the aluminum containing composition contains boehmite, silica and a dopant.

When silica is present in the aluminum containing composition the $SiO_2$ content is between 1 and 40 wt.-%, preferably between 1 and 20 wt.-%, based on the total dry mass of $SiO_2$, aluminum oxide, aluminum oxide hydroxide and aluminum trihydroxide.

The dopants may be oxides or water-soluble salts of alkaline earth metals, Zr, Ti, rare-earth elements or mixtures thereof. Preferably their content is between 0 and 10 wt.-%, preferably between 0 and 5 wt.-%, calculated as oxides based on the total mass of the aluminum oxide, aluminum oxide hydroxide and aluminum trihydroxide.

The aluminum containing composition may be provided in dried powder form or in the form of an aluminum suspension. If the aluminum containing composition is in the form of an aluminum suspension, the suspension comprises the aluminum containing composition and at least water, preferably in a weight ratio of 2:98 to 20:80. The aluminum suspension may further include pH modifying additives for example carboxylic acid or ammonia, preferably mono-carboxylic acids such as acetic acid.

The aluminum suspension is preferably a boehmite suspension wherein the boehmite is prepared by hydrolysis of an Al-alkoxide, most preferably involving hydrothermal aging. Hydrothermal ageing is carried out between 100 und 300°C, preferably between 120 and 240 °C for 0,5 hours to 30 hours, preferably between 3 hours and 10 hours; time and temperature are independently selected.

The bismuth aqueous solution preferably comprises a water-soluble $Bi^{3+}$ salt, more preferably a Bi nitrate or a Bi citrate and most preferably a Bi Citrate. The anion of such salts are preferably organic compounds such as an organic acid. The pH value of the bismuth aqueous solution is preferably between 6 and 8.

Contacting comprises either i) mixing the aluminum containing composition, preferably the aluminum suspension, with the bismuth aqueous solution to form the aluminum bismuth intermediate or ii) impregnating the aluminum containing composition in dried powder form with the bismuth aqueous solution to form the aluminum bismuth intermediate.

Impregnation of the aluminum containing composition may be carried out by any impregnation method known in the art, preferably by incipient wetness impregnation. Such a method provides for impregnating between 80 and 100% of the aluminum containing composition with the bismuth aqueous solution. By % is meant the (Volume of liquid added)/(pore volume).

When the aluminum suspension is mixed with the bismuth aqueous solution the method may include the further step of drying, preferably spray drying, the aluminum bismuth intermediate to form a dried aluminum bismuth intermediate that will then be calcined.

The aluminum bismuth intermediate or the dried aluminum bismuth intermediate is calcined at a temperature of between 500 °C and 1000 °C, more preferably between 600 and 900 °C, even more preferably at a temperature of between 500 and 700 °C, and independent thereof for a period of at least 0.5 hours, preferably between 0.5 and 5 hours, preferably 3 hours.

According to a second aspect of the invention there is provided an alumina bismuth catalyst support prepared according to the method of the invention.

According to a third aspect of the invention, there is provided an alumina bismuth catalyst support comprising:

i) at least 80 wt.-% of a transition alumina based material; and
ii) between 1 and 20 wt.-% of a bismuth oxide, characterized by a crystallinity value $C_{Bi}$ below 10, preferably a crystallinity value $C_{Bi}$ of less than 3.

The transition alumina based material may comprise aluminum oxide, silica and/or dopants.

The transition alumina based material preferably comprises Gamma, Delta or Theta aluminum oxides, or mixtures thereof.

The transition alumina based material preferably comprises at least 50 wt.-% of aluminum oxides

More preferably the transition alumina based material comprises aluminum oxide, silica and a dopant.

When silica is present in the aluminum containing composition the $SiO_2$ content is between 1 and 40 wt.-%, preferably between 1 and 20 wt.-%, based on the oxide mass of silica and the aluminum oxide

The dopants may be oxides or alkaline earth metals, Zr, Ti, rare-earth metals or mixtures thereof. Preferably their content is between 0 and 10 wt.-%, preferably between 0 and 5 wt.-%, calculated as oxides based on the total mass of the aluminum oxide, silica and the dopant.

The alumina bismuth catalyst support comprises a BET specific surface area between 50 and 300 $m^2/g$, preferably between 100 and 200 $m^2/g$. The alumina bismuth catalyst support comprises a pore volume of between 0.1 and 1.5 ml/g, preferably between 0,5 and 1,0 ml/g.

The bismuth oxide is homogenously dispersed in the matrix of the alumina based material. Without being bound by theory the Applicant believes that a homogenous dispersion of the bismuth oxide small crystals in a virtually X-ray amorphous state leads to the beneficial properties of the composite.

The crystallinity value as used herein is determined in accordance with the following method. The X-ray diffraction (XRD) pattern of $Bi_2O_3$ using Cu K alpha radiation comprises the strongest reflex around $2\theta = 28°$ (021 reflex in space group P4-21c). The XRD pattern of a transition based alumina material comprises a strong reflex around $2\theta = 67°$. The normalized intensity ratio of these two reflections (see equation 1) is a measure for the crystallinity of bismuth oxide $C_{Bi}$ on the transition alumina based material

$$C_{Bi} = [(I_{28} - I_{24}) / (I_{67} - I_{72})]/m_{Bi} \qquad \text{(equation 1)}$$

$I_{28}$: Intensity of the reflex around 28°

$I_{24}$: Intensity of baseline near the reflex around 24°

$I_{67}$: Intensity of the reflex around 67°

$I_{72}$: Intensity of baseline near the reflex around 72°

$m_{Bi}$: mass of $Bi_2O_3$ /(mass of $Bi_2O_3$ + mass of transition alumina based material.

Homogeneity is measured by scanning-electron-microscope (SEM) cross-section imaging, optionally together with EDX (Energy Dispersive X-ray Analysis) element mapping revealing the domain sizes of the transition alumina based material, the bismuth oxide and the alumina bismuth catalyst support.

Surface area and pore volume are measured with $N_2$ physisorption using typical volumetric devices like the Quadrasorb from Quantachrome at the temperature of liquid nitrogen. The surface area is determined using BET theory (DIN ISO 9277) while the pore volume is determined according to DIN 66131. The pore radius range is between 18 and 1000Å According to a fourth aspect of the invention there is provided use of the alumina bismuth catalyst support as hereinbefore described as a support for an oxidation catalyst, preferably comprising platinum (Pt) and/or palladium (Pd), in particular a diesel oxidation catalyst for vehicle emission control applications.

The invention will now be described with reference to the following non-limiting examples and Figures in which:

Figure 1 is a powder XRD of the composition obtained in Example 1 and Example 2 compared to Comparative Examples 1-3 showing the difference in crystallinity of $Bi_2O_3$; and

Figure 2 is a powder XRD of the composition obtained in Example 3 compared with Comparative Example 4, together with a simulated XRD pattern of $Bi_2O_3$ showing the difference in crystallinity of $Bi_2O_3$.

**Examples**

Example 1

A bismuth oxide doped silica-alumina with 3 wt.-% $Bi_2O_3$ was prepared according to the present invention.

A Bi-Citrate solution was prepared by adding 516 g Bi-Citrate to 1.7kg $H_2O$. 190 g of a 25 wt.-% $NH_3$ solution was added to obtain a clear solution with pH 7.

The Bi-Citrate solution was added to an alumina suspension containing boehmite and silica in a 95:5 weight ratio calculated as per the oxides. The mixture was spray dried and calcined at 950 °C for 3 h.

Example 2

A bismuth oxide doped silica-alumina with 3 wt.-% $Bi_2O_3$ was prepared according to the present invention.

A Bi-Citrate solution was prepared by adding 12,2 g Bi-Citrate to 148g $H_2O$. 4,1 g of a 25 wt.-% $NH_3$ solution was added to obtain a clear solution with pH 7.

The Bi-Citrate solution was impregnated by incipient wetness impregnation on 234 g of a silica-alumina, SIRAL 5, containing 5 wt.-% $SiO_2$. The product was calcined at 550°C for 3 h.

Comparative Example 1

A bismuth oxide doped silica-alumina with 3 wt.-% $Bi_2O_3$ was prepared according to US 7,611,680 B2 Example 2.

A solution of 1 g Bi-Citrate in 7.7g water with a pH value of 2.8 was prepared. This solution was intensively mixed for 15 minutes with 19.7 g of a silica-alumina, SIRAL 5, containing 5 wt.-% $SiO_2$, dried at 120 °C, ground into a fine powder and calcined at 500 °C for 2h.

Comparative Example 2

A bismuth oxide doped lanthanum doped alumina with 4 wt.-% $Bi_2O_3$ was prepared according to US 7,611,680 B2 Example 3.

To 2 g of a La doped alumina was added a solution of 0.111 g Bi-acetate in 4 ml $H_2O$ and 1ml glacial acetic acid. The resulting paste was mechanically mixed at room temperature for 60 minutes, dried at 130°C for 2.5 hours, ground into a fine powder, and calcined at 500°C for 1h. The material contained 3 wt.% $La_2O_3$.

Comparative Example 3

A bismuth oxide doped silica-alumina with 3 wt.-% $Bi_2O_3$ was prepared according to WO2017/064498 Example 3.

An aqueous suspension of 40 g silica-alumina containing 5 wt.-% $SiO_2$ was wet-milled to a d90 of 19$\mu$m. Then a solution of 2.1 g bismuth-nitrate in diluted nitric acid was added. The mixture was spray dried and calcined at 500 °C.

Example 3

A Bi-Citrate solution was prepared by adding 3,7 g Bi-Citrate to 16,1 g $H_2O$. 1,2 g of a 25 wt.-% $NH_3$ solution was added to obtain a clear solution with pH 7.
The Bi-Citrate solution was impregnated on 18 g of a silica-alumina containing 5 wt.-% $SiO_2$. The product was calcined at 550 °C for 3 h.

Comparative Example 4

A bismuth oxide doped silica-alumina with 10 wt.-% $Bi_2O_3$ was prepared according to WO2017/064498 Example 15.

3,88 g Bi-nitrate pentahydrate were dissolved in 2M nitric acid and impregnated on 18 g of a silica-alumina containing 5 wt.-% $SiO_2$. The product was dried at 105 °C and calcined at 500 °C.

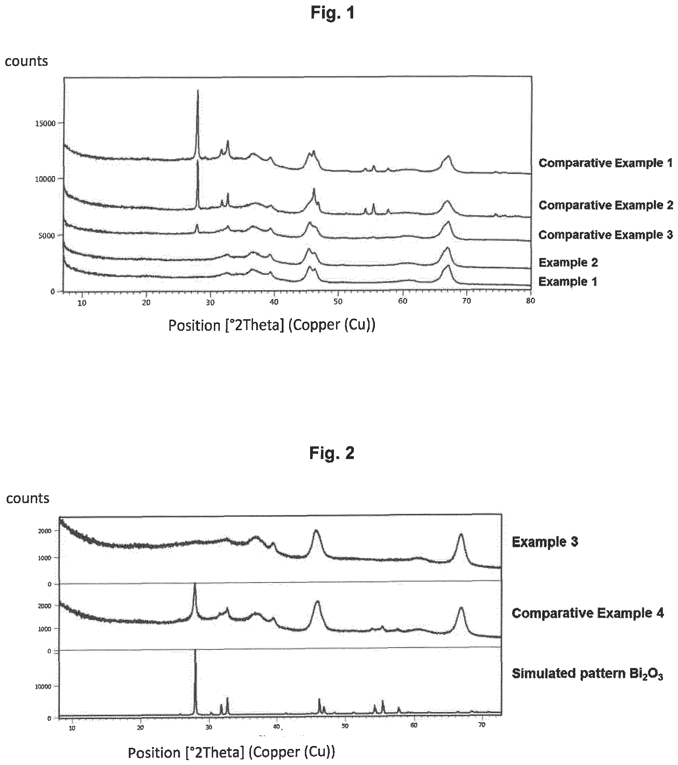

The results are summarized in Figures 1 and 2 and Table 1. The compositions prepared according to the present invention are characterized by substantially smaller crystallinity values regarding the $Bi_2O_3$ when compared to the compositions prepared according to the prior art.

Table 1:

| Examples | $mBi_2O_3$ in wt.% | $Bi_2O_3$ crystallinity value $C_{Bi}$ |
| --- | --- | --- |
| Example 1 | 3 | 1 |
| Example 2 | 3 | 1 |
| Comparative Example 1 | 3 | 130 |
| Comparative Example 2 | 4 | 108 |
| Comparative Example 3 | 3 | 18 |
| Example 3 | 10 | 2 |
| Comparative Example 4 | 10 | 14 |

**Claims**

1. A method to prepare an alumina bismuth catalyst support, the method comprising the steps of:

   i) providing an aluminum containing composition;
   ii) providing a bismuth aqueous solution, the bismuth aqueous solution comprising a bismuth salt and a base comprising nitrogen, preferably ammonia, and having a pH value of between 4 and 9;
   iii) contacting the aluminum containing composition with the bismuth aqueous solution to form an aluminum bismuth intermediate; and
   iv) calcining the aluminum bismuth intermediate to form an alumina bismuth catalyst support.

2. The method of claim 1, wherein the aluminum containing composition comprises silica and/or dopants.

3. The method of claim 1 or claim 2, wherein the dopants comprise oxides or water soluble salts of alkaline earth metals, Zr, Ti, rare-earth metals or mixtures thereof.

4. The method of claim 1 or claim 2, wherein where the aluminum containing composition comprises silica, the silica content is between 1 wt.-%, and 40 wt.-%, preferably between 1 wt.-% and 20 wt.-% and most preferably between 2 and 10 wt.-%, based on the oxide mass of silica and the aluminum oxide, aluminum oxide hydroxide and/ or aluminum trihydroxide.

5. The method of one of claims 1 to 4, wherein the aluminum containing composition is provided in dried powder form or in a suspension.

6. The method of claim 5, wherein the suspension includes the aluminum containing composition and at least water, preferably in a weight ratio of 2:98 to 20:80.

7. The method of one of claims 1 to 6, wherein contacting comprises either

   i) mixing the aluminum suspension with the bismuth aqueous solution to form an aluminum bismuth intermediate or
   ii) impregnating the aluminum containing composition in dried powder form with the bismuth aqueous solution to form an aluminum bismuth intermediate.

8. The method of claim 7, wherein impregnation of the aluminum containing composition comprises incipient wetness impregnation.

9. The method of one of claims 5 to 8, wherein when the aluminum suspension is mixed with the bismuth aqueous solution the method comprises the further step of drying, preferably spray drying, the aluminum bismuth intermediate to form a dried aluminum bismuth intermediate that will then be calcined.

10. The method of one of claims 1 to 9, wherein the aluminum bismuth intermediate or the dried aluminum bismuth intermediate is calcined at a temperature of between 500 °C and 1000 °C, more preferably between 600 °C and 900 °C, even more preferably at a temperature of between 500°C and 700°C, for a period of at least 0,5 hours, preferably between 0.5 and 5 hours.

11. An alumina bismuth catalyst support obtainable according to the method of claims 1 to 10.

12. An alumina bismuth catalyst support comprising:

   i) at least 80 wt.-% of a transitional alumina based material; and
   ii) between 1 and 20 wt.-% of a bismuth oxide, **characterized by** a crystallinity value CBi below 10, preferably a crystallinity value CBi of less than 3.

13. The alumina bismuth catalyst support of claim 12, wherein the transition alumina based material comprises alumina, preferably alumina in the Gamma, Delta or Theta phase, and optionally in addition silica and/or dopants.

14. The alumina bismuth catalyst support of claim 12 or claim 13 further **characterized by** at least one of the following characteristics:

   a) a BET specific surface area between 50 and 300 $m^2/g$, preferably between 100 and 200 $m^2/g$; and/or
   b) a pore volume of between 0.1 and 1.5 ml/g, preferably between 0,5 and 1,0 ml/g.

15. An alumina bismuth catalyst support of one of claims 12 to 14, wherein the alumina bismuth catalyst support is obtainable according to the method of claims 1 to 10.

16. Use of the alumina bismuth catalyst support of one of claims 11 to 15 as a support for an oxidation catalyst, preferably comprising platinum (Pt) and/or palladium (Pd), in particular a diesel oxidation catalyst for vehicle emission control applications.

**Fig. 1**

**Fig. 2**

Europäisches Patentamt

European Patent Office

Office européen des brevets

# EUROPEAN SEARCH REPORT

Application Number

EP 19 21 2712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 864 212 B2 (SHELL OIL CO [US]) 8 March 2005 (2005-03-08) * example 12 * ----- | 1-5,7-11 | INV. B01J21/04 B01J21/12 B01J23/18 |
| X | CN 107 812 519 A (NANJING UNIV SUZHOU HIGH TECH INSTITUTE) 20 March 2018 (2018-03-20) * example 2 * ----- | 1-11 | B01J23/644 B01J35/10 B01J37/00 B01J37/02 |
| X,D | WO 2017/064498 A1 (JOHNSON MATTHEY PLC [GB]) 20 April 2017 (2017-04-20) * examples * ----- | 12-16 | B01J37/04 B01J37/08 B01D53/00 B01J35/00 |
| X,D | US 7 611 680 B2 (NANOSTELLAR INC [US]) 3 November 2009 (2009-11-03) * examples * ----- | 12-16 | |

TECHNICAL FIELDS SEARCHED (IPC)

B01J
B01D

The present search report has been drawn up for all claims

| Place of search | Date of completion of the search | Examiner |
|---|---|---|
| Munich | 6 May 2020 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 2712

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2020

| Patent document cited in search report | | Publication date | Patent family member(s) | | Publication date |
|---|---|---|---|---|---|
| US 6864212 | B2 | 08-03-2005 | AR | 039831 A1 | 02-03-2005 |
| | | | AR | 039832 A1 | 02-03-2005 |
| | | | AT | 344100 T | 15-11-2006 |
| | | | AU | 2003229339 A1 | 12-12-2003 |
| | | | BR | 0311131 A | 22-02-2005 |
| | | | CA | 2486572 A1 | 04-12-2003 |
| | | | CN | 1655868 A | 17-08-2005 |
| | | | DE | 60309464 T2 | 15-11-2007 |
| | | | DK | 1507585 T3 | 12-03-2007 |
| | | | EP | 1507585 A1 | 23-02-2005 |
| | | | ES | 2272991 T3 | 01-05-2007 |
| | | | JP | 4642460 B2 | 02-03-2011 |
| | | | JP | 2005525932 A | 02-09-2005 |
| | | | KR | 20040111661 A | 31-12-2004 |
| | | | KR | 20040111662 A | 31-12-2004 |
| | | | MX | PA04011551 A | 14-02-2005 |
| | | | RU | 2310506 C2 | 20-11-2007 |
| | | | TW | 200400252 A | 01-01-2004 |
| | | | TW | 200400850 A | 16-01-2004 |
| | | | US | 2003220192 A1 | 27-11-2003 |
| | | | US | 2003220193 A1 | 27-11-2003 |
| | | | WO | 03099432 A1 | 04-12-2003 |
| | | | ZA | 200408770 B | 22-11-2005 |
| | | | ZA | 200408771 B | 26-07-2006 |
| CN 107812519 | A | 20-03-2018 | NONE | | |
| WO 2017064498 | A1 | 20-04-2017 | BR | 112018005877 A2 | 16-10-2018 |
| | | | CN | 108025256 A | 11-05-2018 |
| | | | DE | 102016119594 A1 | 20-04-2017 |
| | | | EP | 3334518 A1 | 20-06-2018 |
| | | | GB | 2545539 A | 21-06-2017 |
| | | | JP | 2019500199 A | 10-01-2019 |
| | | | KR | 20180066091 A | 18-06-2018 |
| | | | RU | 2018117276 A | 14-11-2019 |
| | | | US | 2017106337 A1 | 20-04-2017 |
| | | | US | 2019299159 A1 | 03-10-2019 |
| | | | WO | 2017064498 A1 | 20-04-2017 |
| US 7611680 | B2 | 03-11-2009 | CN | 101622069 A | 06-01-2010 |
| | | | EP | 1927399 A2 | 04-06-2008 |
| | | | GB | 2443895 A | 21-05-2008 |
| | | | KR | 20080045596 A | 23-05-2008 |
| | | | US | 2008003155 A1 | 03-01-2008 |

EPO FORM P0459

For more details about this annex : see Official Journal of the European Patent Office, No. 12/82

**EP 3 827 897 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017064498 A1
- US 7611680 B2
- US 7611680 B
- WO 2017064498 A